# EUROPEAN PATENT SPECIFICATION

(11) **EP 4 230 364 B1**
(45) Date of publication and mention of the grant of the patent: **31.07.2024**
(21) Application number: 23153595.6
(22) Date of filing: 27.01.2023
(51) Int. Cl.: B25J 15/06

(54) **PAD-EQUIPPED LIFT DEVICE**
MIT PAD AUSGESTATTETE HEBEVORRICHTUNG
DISPOSITIF DE LEVAGE ÉQUIPÉ D'UN TAMPON

(30) Priority: 10.02.2022 JP 2022019196
(43) Date of publication of application: 23.08.2023
(73) Proprietor: SMC Corporation, Tokyo 101-0021 (JP)
(72) Inventor: SAITOH, Masaru, Ibaraki, 300-2493 (JP); SAKA, Hiroaki, Ibaraki, 300-2493 (JP)
(74) Representative: Keil & Schaafhausen Patentanwälte PartGmbB

(56) References cited:
- EP-A1- 1 369 364
- KR-B1- 101 293 288

## Description

### BACKGROUND OF THE INVENTION

### FIELD OF THE INVENTION

The present invention relates to a pad-equipped lift device that draws and holds an article under suction and transports the article (workpiece).

### DESCRIPTION OF THE RELATED ART

Conventionally, there has been known a pad-equipped lift device for holding and transporting various articles by generating vacuum pressure on the inner side of the pad using Bernoulli Effect generated by making air flow at a high speed.

For example, JP 6535847 B2 discloses a suction hand having a non-contact chuck for generating negative pressure and a bellows-shaped suction pad. According to this suction hand, when a suction pad is brought into contact with a target (an object to be drawn) from above and a space surrounded by the suction pad and the surface of the target is brought into a negative pressure state, the target is drawn and held by the suction pad. EP1369364A1 discloses a Bernoulli effect gripper with a skirt, but does not disclose the skirt being flexible, or wrapping around the object to be gripped.J 3

However, the conventional pad-equipped lift device has a limitation in increasing the holding force for holding the article because the holding of the article depends only on the suction action due to the negative pressure. If the holding force for holding the article is excessively increased, the article may be damaged at the time of the lifting operation.

### SUMMARY OF THE INVENTION

The present invention has the objective of solving the aforementioned problems.

A pad-equipped lift device of the present invention includes a body and a pad, and sucks an article by Bernoulli Effect, wherein the pad includes a connecting portion attached to the end of the body and a flexible skirt portion that expands toward its distal end. Air having flowed along an end surface of the body flows on the inner side of the skirt portion of the pad, whereby the distal end of the skirt portion is deformed to shrink inward.

According to the pad-equipped lift device of the present invention, an article can be held by a gripping force due to deformation of the skirt portion in addition to a suction force due to negative pressure. Further, because the skirt portion expands toward the distal end in a free state, the article can be easily taken into the inner side of the skirt portion.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a sectional view of a pad-equipped lift device according to a first embodiment of the present invention.
FIG. 2 is a bottom view of the pad-equipped lift device of FIG. 1.
FIG. 3 is a sectional view of the pad-equipped lift device of FIG. 1 when a pad is deformed.
FIG. 4 is a bottom view of the pad-equipped lift device of FIG. 1 when the pad is deformed.
FIG. 5 is a sectional view of the pad-equipped lift device of FIG. 1 in a case where a spherical article is held.
FIGS. 6A, 6B, and 6C show a modified example where pads have different distal-end opening shapes.
FIG. 7A shows a modified example where a pad has beams. FIG. 7B shows a deformed state of the pad of FIG. 7A.
FIGS. 8A, 8B, and 8C show modified examples where pads have notches.
FIGS. 9A, 9B, and 9C show modified examples where pads have pleats.
FIG. 10 shows a modified example where a pad has clearance grooves.
FIG. 11 shows a state in which a cylindrical article is held by the pad-equipped lift device that is provided with the pad of FIG. 10.
FIG. 12 is a sectional view of a pad-equipped lift device according to a second embodiment of the present invention.
FIG. 13 is a partially expanded view of the pad-equipped lift device of FIG. 12.
FIG. 14 is a sectional view of a pad-equipped lift device according to a third embodiment of the present invention.
FIG. 15 is a sectional view of a pad-equipped lift device according to a fourth embodiment of the present invention.
FIG. 16 is a bottom view of the pad-equipped lift device of FIG. 15.
FIG. 17 is a sectional view of a pad-equipped lift device according to a fifth embodiment of the present invention.
FIG. 18 is a bottom view of the pad-equipped lift device of FIG. 17.

### DETAILED DESCRIPTION OF THE INVENTION

### (First Embodiment)

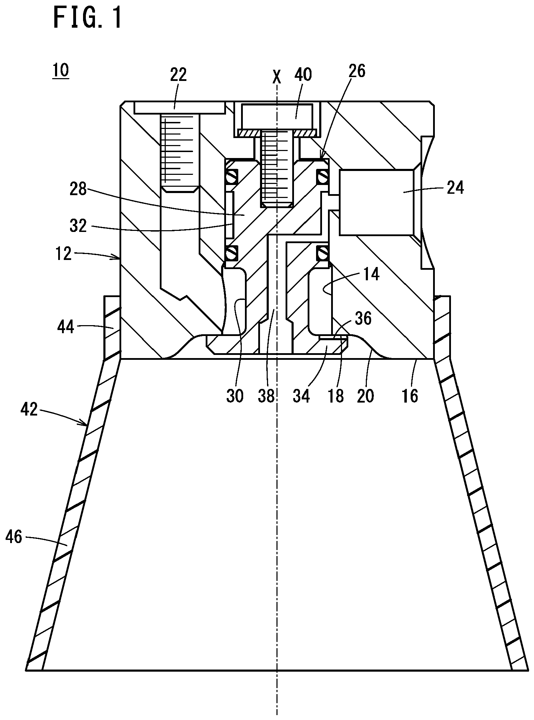

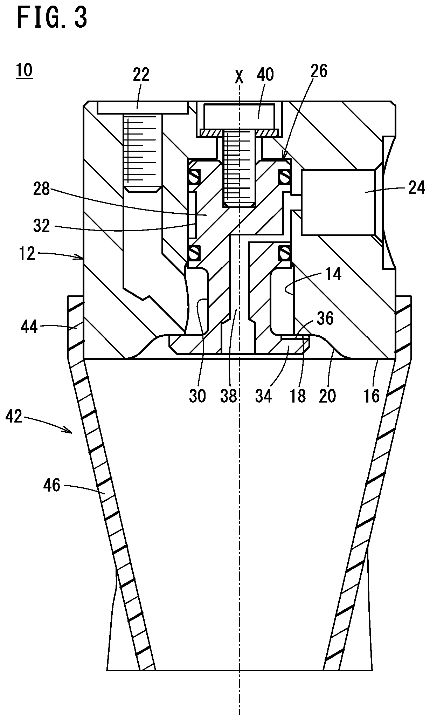

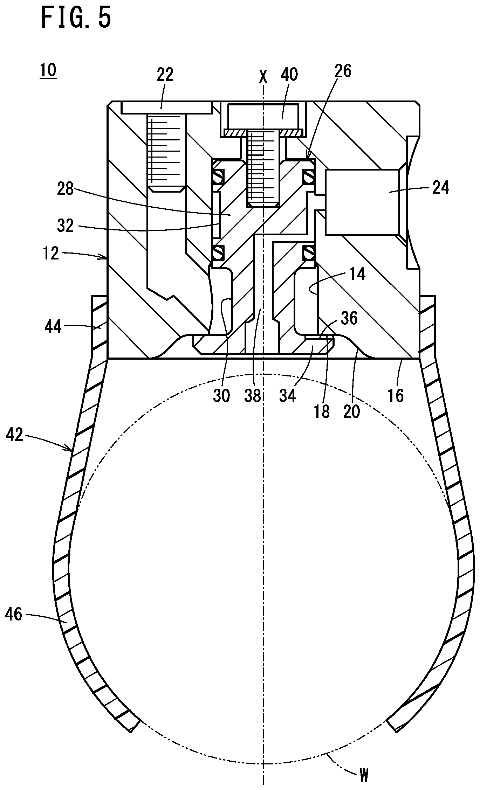

A pad-equipped lift device 10 according to a first embodiment of the present invention will be described with reference to FIGS. 1 to 5. In the following description, when the words relating to the up-and-down direction are used, they refer to the direction in the drawings for convenience and do not limit the actual arrangement. It should be noted that FIG. 1 does not show a cross section taken along one continuous plane, but the left half and the right half of FIG. 1 show cross sections in directions different by 90 degrees about the axis X. The same applies to FIGS. 3 and 5.

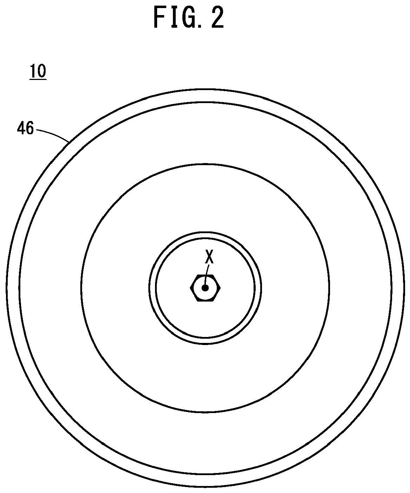

As shown in FIGS. 1 and 2, the pad-equipped lift device 10 includes a body 12, a deflector 26, and a pad 42. The cylindrical body 12 has, in a central portion, a hole 14 for attaching the deflector 26, and the hole 14 opens to a lower surface of the body 12. The lower surface (end surface) of the body 12 is provided with an annular first flat surface 16 in a region near the outer periphery of the lower surface. The first flat surface 16 is perpendicular to the axis X of the body 12 and constitutes an article holding surface. The hole 14 is continuous with the first flat surface 16 via a second flat surface 18 and a curved surface 20.

The body 12 includes a first port 22 and a second port 24. The first port 22 opens to an upper surface of the body 12, and the second port 24 opens to a side surface of the body 12. The first port 22 is a port for generating negative pressure in a space below the body 12. The second port 24 is a port for generating positive pressure in the space below the body 12 to destroy the negative pressure (vacuum pressure) or for monitoring the negative pressure by installing a vacuum switch. Air from an air supply source (not shown) is introduced into the body 12 through the first port 22 or the second port 24.

The cylindrical deflector 26 includes a main body 28 fitted in the hole 14 of the body 12, and a flange portion 34 extending radially outward from a lower portion of the main body 28. The deflector 26 is fixed to the body 12 by inserting a bolt 40 through the body 12 from the upper surface of the body 12 and screwing the bolt 40 into the main body 28 of the deflector 26.

A side surface of the main body 28 of the deflector 26 has a first annular groove 30 that is continuous with an upper surface of the flange portion 34. The first annular groove 30 of the deflector 26 communicates with the first port 22 at a given portion in the circumferential direction. The first annular groove 30 cooperates with the wall surface of the hole 14 of the body 12 to form a flow path for the air supplied from the first port 22. The side surface of the main body 28 of the deflector 26 has a second annular groove 32 at a portion above the first annular groove 30. The second annular groove 32 of the deflector 26 communicates with the second port 24 at a given portion in the circumferential direction. When the negative pressure is to be destroyed, the second annular groove 32 and the wall surface of the hole 14 of the body 12 form a flow path for the air supplied from the second port 24.

The upper surface of the flange portion 34 of the deflector 26 is in contact with the second flat surface 18 of the body 12. The upper surface of the flange portion 34 has a plurality of radially extending nozzle grooves 36. The plurality of nozzle grooves 36 communicate with the first annular groove 30 and constitute the flow path for the air supplied from the first port 22. The air supplied from the first port 22 is ejected radially through the first annular groove 30 of the main body 28 and the nozzle grooves 36 of the deflector 26. The air ejected from the nozzle grooves 36 flows along the curved surface 20 and the first flat surface 16 of the body 12.

The deflector 26 has a bent passage 38 for connect the second port 24 with a space below the deflector 26. One end of the bent passage 38 opens to the lower surface of the deflector 26. The other end of the bent passage 38 communicates with the second annular groove 32 of the deflector 26 at a predetermined position in the circumferential direction. When the negative pressure is to be destroyed, the air supplied from the second port 24 flows downward from the deflector 26 through the second annular groove 32 and the bent passage 38 of the deflector 26.

The pad 42 has a cylindrical connecting portion 44 and a conical skirt portion 46 that is continuous with a lower portion of the connecting portion 44. The connecting portion 44 and the skirt portion 46 are integrally molded from a flexible resin such as silicone rubber or elastomer. The connecting portion 44 is attached to the outer periphery of the lower end portion of the body 12 by press-fitting or the like. The axis X of the pad 42 coincides with the axis X of the body 12. In a free state, the skirt portion 46 expands downward in diameter in a tapered shape. That is, the skirt portion 46 expands toward the distal end.

Next, the operation of the pad-equipped lift device 10 when the air from the air supply source is supplied to the first port 22 will be described.

The air supplied to the first port 22 flows along the curved surface 20 and the first flat surface 16 of the body 12 after passing through the first annular groove 30 and the nozzle groove 36 of the deflector 26. The air having flowed along the first flat surface 16 collides with the inner surface of the skirt portion 46 of the pad 42 and then flows downward on the inner side of the skirt portion 46. Due to the Coanda effect, the flexible skirt portion 46 bends and deforms, being dragged by air that flows at high speed on the inner side of the skirt portion 46.

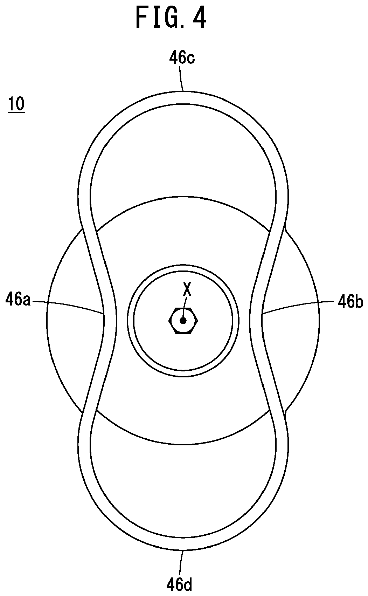

FIGS. 3 and 4 schematically show the bending and deformation of the skirt portion 46. A first portion 46a and a second portion 46b located on opposite sides of the axis X of the pad 42 come most close to the axis X of the pad 42. A third portion 46c and the fourth portion 46d, which are equidistant from the first portion 46a and the second portion 46b, are furthest from the axis X of the pad 42. At this time, the volume of the inner side of the skirt portion 46 becomes small. Although the skirt portion 46 is not necessarily deformed into the shape shown in FIG. 4, the distal end (lower end) of the skirt portion 46 is deformed at least in such a way that two portions facing each other across the axis X of the pad 42 approach the axis X of the pad 42 and so the skirt portion 46 folds, shrinking inward.

Next, an operation of holding an article by the pad-equipped lift device 10 will be described. The pad-equipped lift device 10 is attached to an arm of a transport device (not shown), for example. An article (workpiece) (not shown) is placed at a predetermined place such as on a floor surface.

The transporting device is driven, whereby the pad-equipped lift device 10 approaches the article from above. After the articles are held in the inner side of the skirt portion 46, the air from the air supply source is supplied to the first port 22 of the pad-equipped lift device 10. The air supplied to the first port 22 flows along the curved surface 20 and the first flat surface 16 of the body 12 after passing through the first annular groove 30 and the nozzle groove 36 of the deflector 26. The air having flowed along the first flat surface 16 collides with the inner surface of the skirt portion 46 of the pad 42 and then flows downward on the inner side of the skirt portion 46.

When the article enters the inner side of the skirt portion 46, the gap between the inner surface of the skirt portion 46 and the article is narrowed, and the gap between the first flat surface 16 of the body 12 and the article is also narrowed. Therefore, the flowing speed of the air passing through these gaps increases, and negative pressure is generated on the inner side of the skirt portion 46 above the article because of Bernoulli Effect. The article is drawn and lifted. When a relatively large item is drawn, the item comes into contact with the inner surface of the flexible skirt portion 46 prior to hitting the body 12. Therefore, the article is prevented from being damaged.

Further, due to the Coanda effect, the flexible skirt portion 46 bends and deforms, being dragged by air flowing at high speed on the inner side of the skirt portion 46. When the article W is spherical, such as a cherry tomato or a strawberry, the skirt portion 46 deforms as shown in FIG. 5. Since the distal end of the skirt portion 46 partially folds inward, the article W is supported from below by the distal end of the skirt portion 46. The article W is held by the pad-equipped lift device 10 with a combined force of a suction force due to negative pressure and a gripping force due to deformation of the skirt portion 46.

According to the pad-equipped lift device 10 of the present embodiment, when air flows at high speed on the inner side of the skirt portion 46 of the pad 42, the distal end of the flexible skirt portion 46 deforms shrinking inward, whereby the article can be supported from below. Therefore, the article can be held by the gripping force due to the deformation of the skirt portion 46 in addition to the suction force due to the negative pressure. Further, since the skirt portion 46 expands toward the distal end in a free state, the article can be easily taken into the inner side of the skirt portion 46. The same effects or benefits can be obtained in the modified example described below.

### (Modified Example of Pad with Different Distal-End Opening Shape)

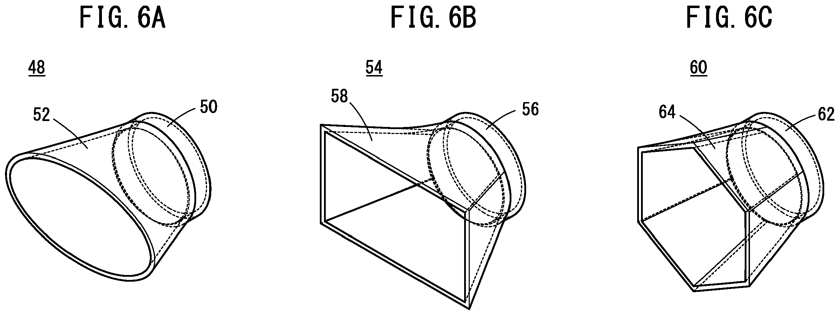

Although the skirt portion 46 of the pad 42 has a conical shape in the above-described pad-equipped lift device 10, the skirt portion may have a shape shown in FIGS. 6A to 6C depending on the shape of the article to be held.

A pad 48 of the first modified example shown in FIG. 6A has a cylindrical connecting portion 50 and a skirt portion 52 that is continuous with the connecting portion 50. As the skirt portion 52 extends away from the connecting portion 50, the skirt portion 52 separates away from the axis of the pad 48. That is, the skirt portion 52 expands toward the distal end. The distal-end opening shape of the skirt portion 52 is an ellipse.

The pad 54 of the second modified example shown in FIG. 6B has a cylindrical connecting portion 56 and a skirt portion 58 that is continuous with the connecting portion 56. The skirt portion 58 expands toward the distal end. The distal-end opening shape of the skirt portion 58 is rectangular. The outer shape of the skirt portion 58 when cut in a plane perpendicular to the axis of the pad 54 gradually changes from a circle to a rectangle as the skirt portion 58 extends away from the connecting portion 56.

A pad 60 of the third modified example shown in FIG. 6C has a cylindrical connecting portion 62 and a skirt portion 64 that is continuous with the connecting portion 62. The skirt portion 64 expands toward the distal end. The distal-end opening shape of the skirt portion 64 is a hexagon. When cut in a plane perpendicular to the axis of the pad 60, the outer shape of the skirt portion 64 gradually changes from a circle to a hexagon as the skirt portion 64 extends away from the connecting portion 62.

### (Modified Example of Pad with Beam)

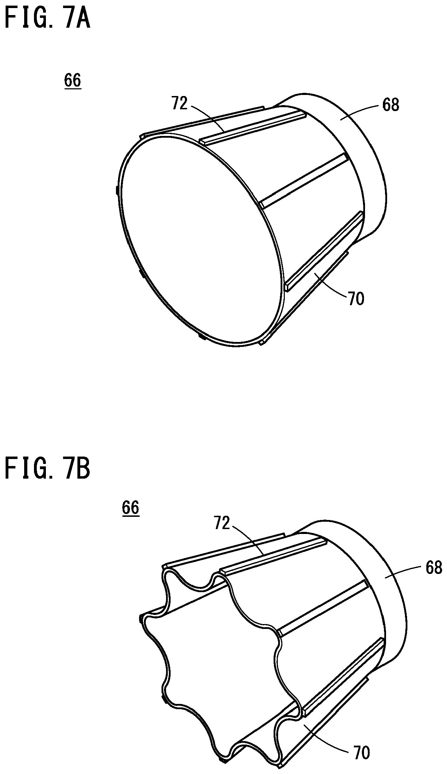

A modified example where a pad of the above-described pad-equipped lift device 10 has beams is shown in FIG. 7A.

A pad 66 of the fourth modified example shown in FIG. 7A has a cylindrical connecting portion 68 and a conical skirt portion 70 that is continuous with the connecting portion 68. As the skirt portion 70 extends away from the connecting portion 68, the skirt portion 70 separates away from the axis of the pad 66. That is, the skirt portion 70 expands toward the distal end. The skirt portion 70 includes a plurality of beams 72 extending along a generating line of the skirt portion 70. Each beam 72 extends from the distal end of the skirt portion 70 to the connecting portion 68. The plurality of beams 72 are arranged at equal angles around the axis of the pad 66.

The skirt portion 70 is partially reinforced because it includes a plurality of beams 72. FIG. 7B shows the state of bending and deforming of the skirt portion 70. When air flows at high speed on the inner side of the skirt portion 70, the skirt portion 70 deforms shrinking inward in regions between the adjacent beams 72. The skirt portion 70 does not deform in regions where the beam 72 are present, and thus can maintain the strength as a whole.

### (Modified Example of Pad with Notch)

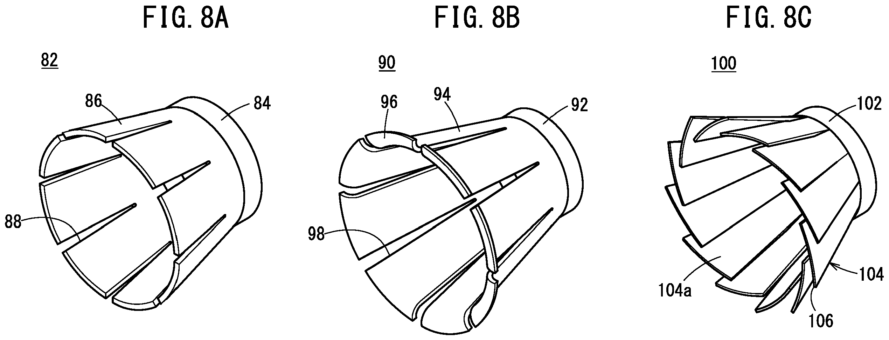

FIGS. 8A-8C show modified examples where pads of the above-described pad-equipped lift device 10 include notches.

A pad 82 of the fifth modified example shown in FIG. 8A has a cylindrical connecting portion 84 and a conical skirt portion 86 that is continuous with the connecting portion 84. As the skirt portion 86 extends away from the connecting portion 84, the skirt portion 86 separates away from the axis of the pad 82. That is, the skirt portion 86 expands toward the distal end. The skirt portion 86 includes a plurality of notches 88. Each notch 88 extends from the distal end of the skirt portion 86 to the vicinity of the connecting portion 84. The plurality of notches 88 are arranged at equal angular intervals around the axis of the pad 82. Since the skirt portion 86 is provided with a plurality of notches 88, the skirt portion 86 has a large degree of freedom with respect to deformation and can hold articles of various shapes.

The pad 90 of the sixth modified example shown in FIG. 8B has a cylindrical connecting portion 92 and a conical skirt portion 94 that is continuous with the connecting portion 92. The skirt portion 94 expands toward the distal end. The distal end of the skirt portion 94 is provided with an outwardly curved portion 96. The skirt portion 94 includes a plurality of notches 98. Each notch 98 extends from the distal end of the skirt portion 94 including the curved portion 96 to the vicinity of the connecting portion 92. The plurality of notches 98 are arranged at equal angles around the axis of the pad 90. Since the skirt portion 94 is provided with a plurality of notches 98, the skirt portion 94 has a large degree of freedom with respect to deformation and can hold articles of various shapes. Further, since the skirt portion 94 is provided with the curved portion 96 at the distal end thereof, the distal end of the skirt portion 94 smoothly expands for example when it is pressed against a floor surface on which an article has been placed. Therefore, a cushioning effect can be obtained and an article can be easily held.

A pad 100 of the seventh modified example shown in FIG. 8C has a cylindrical connecting portion 102 and a conical skirt portion 104 that is continuous with the connecting portion 102. The skirt portion 104 expands toward the distal end. A plurality of notches 106 are formed from the distal end of the skirt portion 104 to the connecting portion 102 and thus the skirt portion 104 is made up from a plurality of strips of skirt pieces 104a. The adjacent strips of skirt pieces 104a are partially overlapped with each other. Since the skirt portion 104 is provided with a plurality of notches 106, the skirt portion 104 has a large degree of freedom with respect to deformation and can hold articles of various shapes. Further, since the adjacent skirt pieces 104a are overlapped with each other, the negative pressure (vacuum pressure) generated on the inner side of the skirt portion 104 is not impaired.

### (Modified Example of Pad with Pleat)

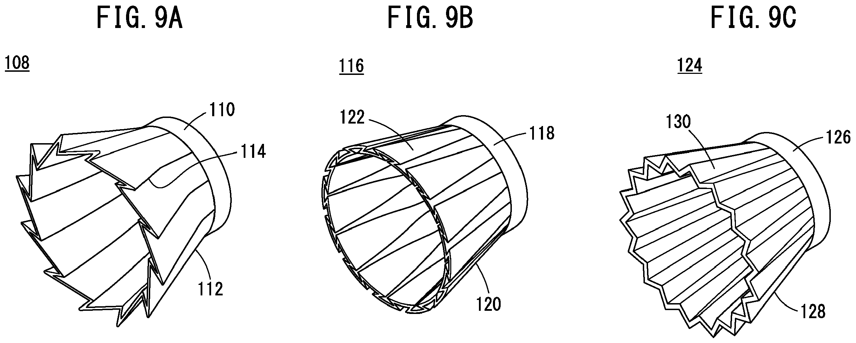

Modified examples where pads of the above-described pad-equipped lift device 10 include overlapping pleats are shown in FIGS. 9A-9C.

A pad 108 of the eighth modified example shown in FIG. 9A has a cylindrical connecting portion 110 and a conical skirt portion 112 that is continuous with the connecting portion 110. As the skirt portion 112 extends away from the connecting portion 110, the skirt portion 112 separates away from the axis of the pad 108. That is, the skirt portion 112 expands toward the distal end. The skirt portion 112 includes a plurality of one-way pleats 114. Each one-way pleat 114 extends from the distal end of the skirt portion 112 to the connecting portion 110. The plurality of one-way pleats 114 are arranged at equal angular intervals around the axis of the pad 108. Since the skirt portion 112 is provided with a plurality of one-way pleats 114, the skirt portion 112 has a large degree of freedom with respect to deformation and can hold articles of various shapes.

A pad 116 of the ninth modified example shown in FIG. 9B has a cylindrical connecting portion 118 and a conical skirt portion 120 that is continuous with the connecting portion 118. The skirt portion 120 expands toward the distal end. The skirt portion 120 includes a plurality of box pleats 122. Each box pleat 122 extends from the distal end of the skirt portion 120 to the connecting portion 118. The plurality of box pleats 122 are arranged at equal angular intervals around the axis of the pad 116. Since the skirt portion 120 is provided with a plurality of box pleats 122, the skirt portion 120 has a large degree of freedom with respect to deformation and can hold articles of various shapes.

The pad 124 of the tenth modified example shown in FIG. 9C has a cylindrical connecting portion 126 and a skirt portion 128 that is continuous with the connecting portion 126. The skirt portion 128 expands toward the distal end. The skirt portion 128 includes a plurality of accordion pleats 130. Each accordion pleat 130 extends from the distal of the skirt portion 128 to the connecting portion 126. The plurality of accordion pleats 130 are arranged at equal angular intervals around the axis of the pad 124. Since the skirt portion 128 is provided with a plurality of accordion pleats 130, the skirt portion 128 has a large degree of freedom with respect to deformation and can hold articles of various shapes.

### (Modified example where pad has clearance groove)

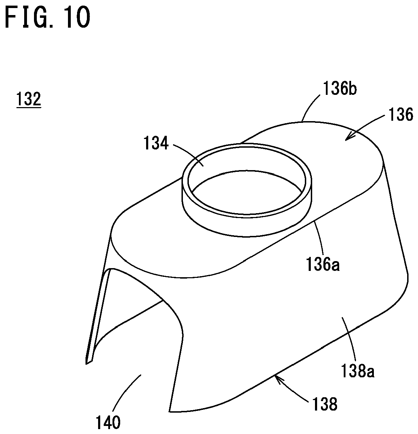

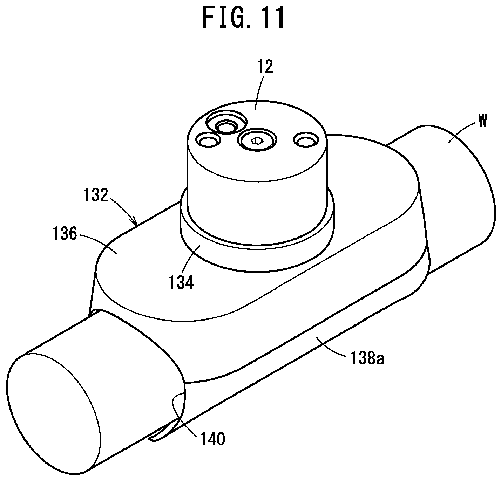

FIGS. 10 and 11 show modified examples of pads of the above-described pad-equipped lift device 10 provided with clearance grooves into which articles enter.

A pad 132 of the eleventh modified example shown in FIG. 10 has a cylindrical connecting portion 134, a flat plate-shaped base portion 136 extending outward from the outer peripheral surface of the connecting portion 134, and a skirt portion 138 extending from the outer periphery of the base portion 136 in the direction opposite to the connecting portion 134. That is, the pad 132 has a base portion 136 that connects the skirt portion 138 to the connecting portion 134. The connecting portion 134, the base portion 136, and the skirt portion 138 are integrally molded from a flexible resin such as silicone rubber or elastomer.

The outer periphery of the base portion 136 has a shape in which two straight long sides 136a and two curved short sides 136b are combined. The skirt portion 138 is provided with a pair of clearance grooves 140 at positions corresponding to the short sides 136b of the base portion 136. Each clearance groove 140 is formed from the distal end of the skirt portion 138 to the vicinity of the base portion 136. The skirt portion 138 is provided with a pair of skirt pieces 138a at positions corresponding to the long sides 136a of the base portion 136. Each skirt piece 138a is inclined with respect to the axis of the pad 132 such that the skirt piece 138a extends away from the axis of the pad 132 as it extends away from the base portion 136.

The pad 132 is particularly suitable for holding an elongated article W. FIG. 11 shows a state in which a cylindrical article W is held by a pad-equipped lift device provided with the pad 132. The cylindrical article W is inserted through a pair of clearance grooves 140 of the skirt portion 138 and supported from below by a pair of skirt pieces 138a, the distal ends of which are deformed inward.

### (Second Embodiment)

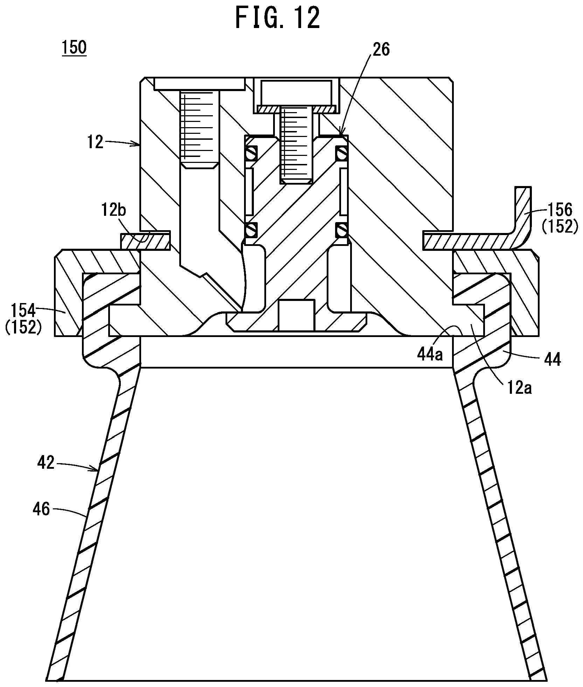

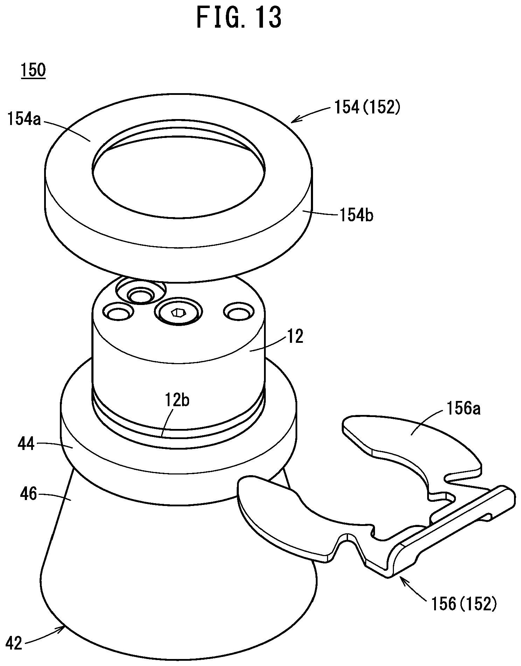

Next, a pad-equipped lift device 150 according to a second embodiment of the present invention will be described with reference to FIGS. 12 and 13. In respect of the pad-equipped lift device according to the second embodiment, the same or equivalent components as those of the above-described pad-equipped lift device 10 are denoted by the same reference numerals.

As shown in FIGS. 12 and 13, the pad-equipped lift device 150 is made up from the body 12, the deflector 26, the pad 42, and a disengagement stopper 152. The pad 42 includes the cylindrical connecting portion 44 and the conical skirt portion 46 that is continuous with the connecting portion 44. The skirt portion 46 expands toward the distal end. The inner peripheral surface of the connecting portion 44 of the pad 42 is provided with an annular groove portion 44a. The cylindrical body 12 is provided with an annular flange portion 12a projecting radially outward from the lower end of the body 12. The flange portion 12a of the body 12 engages with the groove portion 44a of the pad 42, whereby the pad 42 is attached to the body 12.

The disengagement stopper 152 is made up from a first disengagement stopper 154 made of metal and a second disengagement stopper 156 made of metal. The first disengagement stopper 154 has an annular flat plate portion 154a and a cylindrical portion 154b bent downward at a right angle from the outer periphery of the flat plate portion 154a. The cylindrical portion 154b of the first disengagement stopper 154 is fitted to the connecting portion 44 of the pad 42 from the outside. The flat plate portion 154a of the first disengagement stopper 154 abuts against an end face of the connecting portion 44 of the pad 42.

The second disengagement stopper 156 is made up from a U-shaped plate material and has a pair of engagement pieces 156a. The outer peripheral surface of the body 12 has an annular groove portion 12b at a position slightly apart from the flange portion 12a. When the pair of engagement pieces 156a of the second disengagement stopper 156 engage with the groove portion 12b of the body 12, the flat plate portion 154a of the first disengagement stopper 154 is sandwiched between the end surface of the connecting portion 44 of the pad 42 and the engagement piece 156a of the second disengagement stopper 156. In this way, the pad 42 is reliably prevented from being separated from the body 12.

### (Third Embodiment)

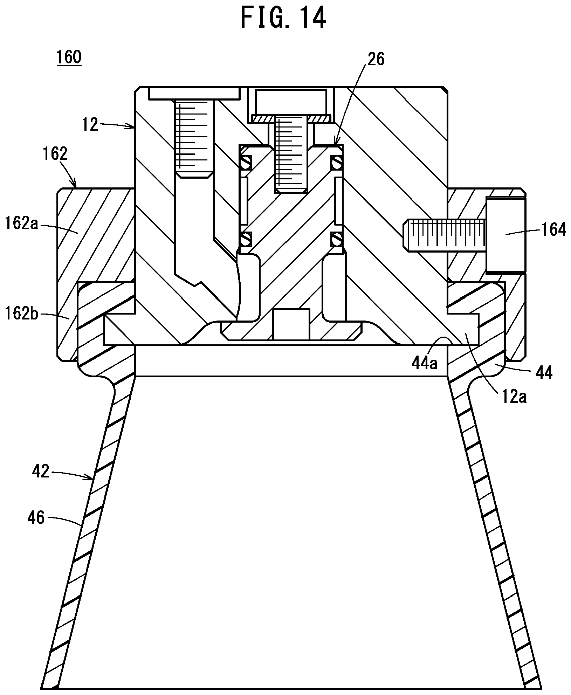

Next, a pad-equipped lift device according to a third embodiment of the present invention will be described with reference to FIG. 14. In respect of the pad-equipped lift device according to the third embodiment, the same or equivalent components as those of the above-described pad-equipped lift device 10 are denoted by the same reference numerals.

A pad-equipped lift device 160 includes the body 12, the deflector 26, the pad 42, and a disengagement stopper 162. The pad 42 includes the cylindrical connecting portion 44 and the conical skirt portion 46 that is continuous with the connecting portion 44. The skirt portion 46 expands toward the distal end. The inner peripheral surface of the connecting portion 44 of the pad 42 is provided with an annular groove portion 44a. The cylindrical body 12 is provided with an annular flange portion 12a projecting radially outward from the lower end of the body 12. The flange portion 12a of the body 12 engages with the groove portion 44a of the pad 42, whereby the pad 42 is attached to the body 12.

The disengagement stopper 162 made of metal has a thick first cylindrical portion 162a and a thin second cylindrical portion 162b extending downward from the first cylindrical portion 162a. The first cylindrical portion 162a is fitted to the body 12 from the outside. The second cylindrical portion 162b is fitted to the connecting portion 44 of the pad 42 from the outside. The lower surface of the first cylindrical portion 162a comes into contact with the end face of the connecting portion 44 of the pad 42. When a screw member 164 is inserted through the first cylindrical portion 162a from a side surface of the first cylindrical portion 162a and screwed into a side surface of the body 12, the disengagement stopper 162 is fixed to the body 12. In this way, the pad 42 is reliably prevented from being separated from the body 12.

### (Fourth Embodiment)

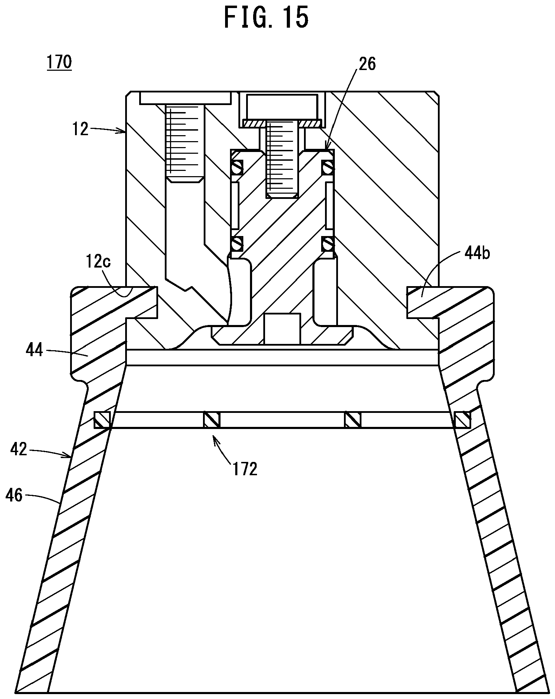

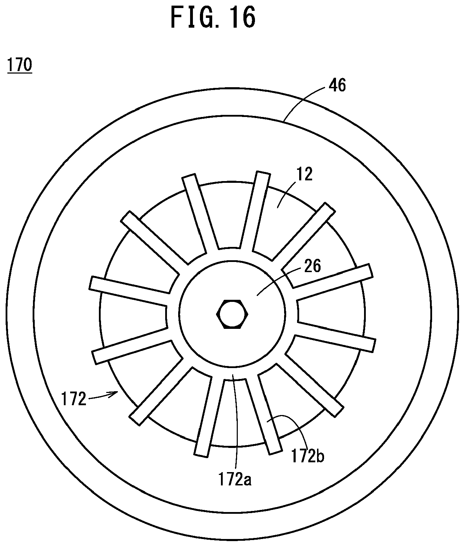

Next, a pad-equipped lift device according to a fourth embodiment of the present invention will be described with reference to FIGS. 15 and 16. In respect of the pad-equipped lift device according to the fourth embodiment, the same or equivalent components as those of the above-described pad-equipped lift device 10 are denoted by the same reference numerals.

As shown in FIG. 15, a pad-equipped lift device 170 includes the body 12, the deflector 26, and the pad 42. The pad 42 has the cylindrical connecting portion 44, the conical skirt portion 46 that is continuous with the connecting portion 44, and a net portion 172 disposed on the inner side of the skirt portion 46. The connecting portion 44 and the skirt portion 46 are made of a flexible resin such as silicone rubber or elastomer. The net portion 172 is made of resin or metal and is an insert when the skirt portion 46 is molded through insert molding.

The skirt portion 46 expands toward the distal end. The connecting portion 44 of the pad 42 includes an annular flange portion 44b projecting radially inward. The outer peripheral surface of the cylindrical body 12 is provided with an annular groove portion 12c. The flange portion 44b of the pad 42 engages with the groove portion 12c of the body 12, whereby the pad 42 is attached to the body 12.

As shown in FIG. 15, the net portion 172 of the pad 42 is disposed close to the body 12. As shown in FIG. 16, the net portion 172 of the pad 42 includes an annular ring portion 172a facing the lower surface of the deflector 26, and a plurality of bridging portions 172b extending radially from the outer periphery of the ring portion 172a. The net portion 172 is connected to the skirt portion 46 at the distal ends of the plurality of bridging portions 172b. The plurality of bridging portions 172b are arranged at equal angles in the circumferential direction.

Since the pad 42 of the pad-equipped lift device 170 has the net portion 172, an article to be sucked is prevented from colliding with the body 12. Further, since the connecting portion 44 and the skirt portion 46 are formed of a flexible resin, a cushioning effect can be obtained when the article to be sucked comes into contact with the net portion 172.

In the present embodiment, the net portion 172 is an insert when the skirt portion 46 is molded through insert molding, but the connecting portion 44, the skirt portion 46, and the net portion 172 may be integrally molded from the same material.

### (Fifth Embodiment)

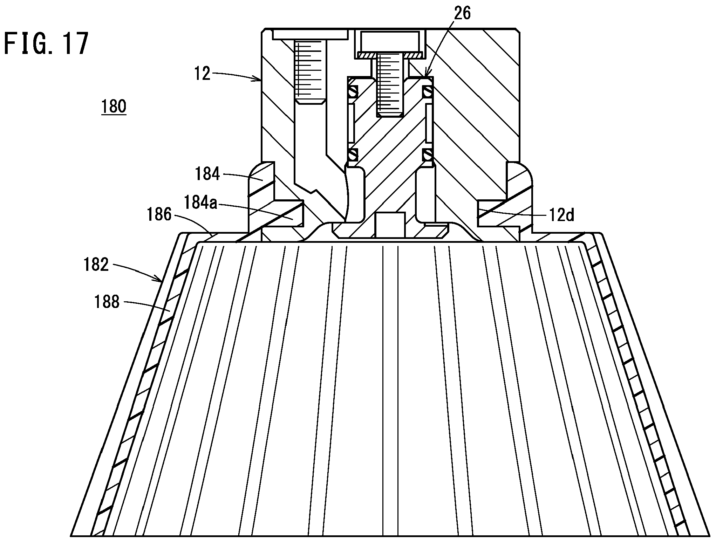

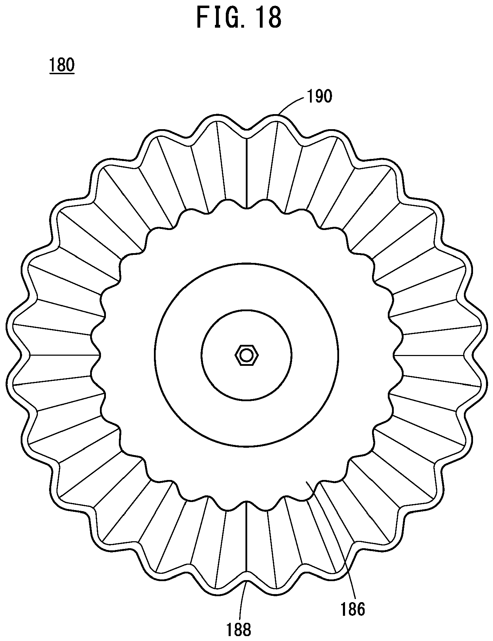

Next, a pad-equipped lift device 180 according to a fifth embodiment of the present invention will be described with reference to FIGS. 17 and 18. In respect of the pad-equipped lift device 180 according to the fifth embodiment, the same or equivalent components as those of the above-described pad-equipped lift device 10 are denoted by the same reference numerals.

As shown in FIG. 17, the pad-equipped lift device 180 is made up from the body 12, the deflector 26, and a pad 182. The pad 182 has a cylindrical connecting portion 184, a plate-shaped base portion 186 that spreads in a ring shape from the outer peripheral surface of the connecting portion 184, and a skirt portion 188 that extends from the outer periphery of the base portion 186 in the direction opposite to the connecting portion 184. That is, the pad 182 includes the plate-shaped base portion 186 for connecting the skirt portion 188 to the connecting portion 184. The connecting portion 184, the base portion 186, and the skirt portion 188 are integrally molded from a flexible resin such as silicone rubber or elastomer.

The skirt portion 188 expands toward the distal end. As shown in FIG. 18, the skirt portion 188 includes a plurality of accordion pleats 190. Each accordion pleat 190 extends from the distal end of the skirt portion 188 to the connecting portion 184. The plurality of accordion pleats 190 are arranged at equal angular intervals around the axis of the pad 182.

The connecting portion 184 of the pad 182 includes an annular flange portion 184a projecting radially inward. The outer peripheral surface of the cylindrical body 12 is provided with an annular groove portion 12d. When the flange portion 184a of the pad 182 engages with the groove portion 12d of the body 12, the pad 182 is attached to the body 12.

Since the pad 182 has the plate-shaped base portion 186 connecting the skirt portion 188 to the connecting portion 184, it is suitable for holding a relatively large article. Further, since the skirt portion 188 is provided with a plurality of accordion pleats 190, it has a large degree of freedom with respect to deformation and can hold articles of various shapes.

## Claims

1. A pad-equipped lift device (10, 150, 160, 170) comprising a body (12) and a pad (42, 48, 54, 60, 66, 82, 90, 100, 108, 116, 124, 132, 182), and sucking an article by Bernoulli Effect,
wherein the pad includes
a connecting portion (44, 50, 56, 62, 68, 84, 92, 102, 110, 118, 126, 134, 184) attached to an end of the body, and
a skirt portion (46, 52, 58, 64, 70, 86, 94, 104, 112, 120, 128, 138, 188) that is flexible and expands toward a distal end of the skirt portion, and
air flowing along an end surface of the body flows on an inner side of the skirt portion of the pad, whereby the distal end of the skirt portion is deformed to shrink inward.

2. The pad-equipped lift device according to claim 1, wherein
the pad is made of silicone rubber.

3. The pad-equipped lift device according to claim 1, wherein
the skirt portion is conical.

4. The pad-equipped lift device according to claim 1, wherein
a distal-end opening shape of the skirt portion is an ellipse, or
wherein
a distal-end opening shape of the skirt portion is a polygon.

5. The pad-equipped lift device according to claim 1, wherein
the skirt portion includes a plurality of beams (72) extending from the distal end of the skirt portion to the connecting portion.

6. The pad-equipped lift device according to claim 1, wherein
the skirt portion includes a plurality of notches (88, 98, 106) extending from the distal end of the skirt portion to a vicinity of the connecting portion.

7. The pad-equipped lift device according to claim 1, wherein
the skirt portion is provided with a plurality of notches formed from the distal end of the skirt portion to the connecting portion,
the skirt portion is made up from a plurality of strips of skirt pieces (104a), and
adjacent strips of skirt pieces out of the plurality of strips of skirt pieces overlap each other.

8. The pad-equipped lift device according to claim 1, wherein
the skirt portion includes a plurality of pleats (114, 122, 130, 190) extending from the distal end of the skirt portion to the connecting portion.

9. The pad-equipped lift device according to claim 1, wherein
the skirt portion includes a pair of clearance grooves (140) .

10. The pad-equipped lift device according to claim 9, wherein
the pad includes a base portion (136) that is flat and connects the skirt portion to the connecting portion,
an outer circumference of the base portion has a shape combining two long sides (136a) and two short sides (136b), and
the skirt portion includes the clearance grooves at positions corresponding to the short sides of the base portion.

11. The pad-equipped lift device according to claim 6 or 9, wherein
the distal end of the skirt portion is provided with an outwardly curved portion.

12. The pad-equipped lift device according to claim 1, further comprising
a disengagement stopper (152, 162) that prevents the pad from being disengaged from the body.

13. The pad-equipped lift device according to claim 12, wherein
the disengagement stopper is made up from a first disengagement stopper (154) and a second disengagement stopper (156),
the first disengagement stopper includes
a flat plate portion (154a) that comes into contact with an end surface of the connecting portion of the pad, and
a cylindrical portion (154b) that fits to the connecting portion of the pad,
the second disengagement stopper includes an engagement piece (156a) that engages with a groove portion (12b) of the body, and
the flat plate portion of the first disengagement stopper is sandwiched between the end surface of the connecting portion of the pad and the engagement piece of the second disengagement stopper.

14. The pad-equipped lift device according to claim 1, wherein
the pad includes a net portion (172) that prevents the article from colliding with the body.

15. The pad-equipped lift device according to claim 1, wherein
the pad includes a base portion (136, 186) that is plate-shaped and connects the skirt portion to the connecting portion.

## Patentansprüche

1. Eine mit einem Pad ausgestattete Hebevorrichtung (10, 150, 160, 170), die einen Körper (12) und ein Pad (42, 48, 54, 60, 66, 82, 90, 100, 108, 116, 124, 132, 182) umfasst und einen Gegenstand durch den Bernoulli-Effekt ansaugt,
wobei das Pad Folgendes umfasst
einen Verbindungsabschnitt (44, 50, 56, 62, 68, 84, 92, 102, 110, 118, 126, 134, 184), der an einem Ende des Körpers angebracht ist, und
einen Schürzenabschnitt (46, 52, 58, 64, 70, 86, 94, 104, 112, 120, 128, 138, 188), der flexibel ist und sich zu einem distalen Ende des Schürzenabschnitts hin ausdehnt, und
Luft, die entlang einer Endfläche des Körpers strömt, auf eine Innenseite des Randabschnitts des Pads strömt, wodurch das distale Ende des Randabschnitts verformt wird, um nach innen zu schrumpfen.

2. Die mit einem Polster ausgestattete Hebevorrichtung nach Anspruch 1, wobei das Polster aus Silikonkautschuk hergestellt ist.

3. Die mit einem Polster versehene Hebevorrichtung nach Anspruch 1, wobei der Schürzenteil konisch ist.

4. Die mit einem Polster ausgestattete Hebevorrichtung nach Anspruch 1,
wobei eine distal endende Öffnungsform des Schürzenabschnitts eine Ellipse ist, oder
Wobei eine distal endende Öffnungsform des Schürzenabschnitts ein Vieleck ist.

5. Die mit einem Pad ausgestattete Hebevorrichtung nach Anspruch 1, wobei der Schürzenabschnitt eine Vielzahl von Trägern (72) aufweist, die sich vom distalen Ende des Schürzenabschnitts zum Verbindungsabschnitt erstrecken.

6. Die mit einem Pad ausgestattete Hebevorrichtung nach Anspruch 1, wobei der Schürzenabschnitt eine Vielzahl von Kerben (88, 98, 106) aufweist, die sich von dem distalen Ende des Schürzenabschnitts bis in die Nähe des Verbindungsabschnitts erstrecken.

7. Die mit einem Pad ausgestattete Hebevorrichtung nach Anspruch 1, wobei
der Schürzenabschnitt mit einer Vielzahl von Kerben versehen ist, die vom distalen Ende des Schürzenabschnitts zum Verbindungsabschnitt verlaufen,
der Schürzenabschnitt aus einer Vielzahl von Streifen von Schürzenstücken (104a) gebildet ist, und
benachbarte Streifen von Schürzenteilen aus der Vielzahl von Streifen von Schürzenteilen einander überlappen.

8. Die mit einem Pad ausgestattete Hebevorrichtung nach Anspruch 1, wobei der Schürzenabschnitt eine Vielzahl von Falten (114, 122, 130, 190) aufweist, die sich vom distalen Ende des Schürzenabschnitts zum Verbindungsabschnitt erstrecken.

9. Die mit einem Pad ausgestattete Hebevorrichtung nach Anspruch 1, wobei der Schürzenabschnitt ein Paar von Freiraumnuten (140) aufweist.

10. Die mit einem Polster ausgestattete Hebevorrichtung nach Anspruch 9, wobei
das Pad einen Basisabschnitt (136) aufweist, der flach ist und den Schürzenabschnitt mit dem Verbindungsabschnitt verbindet,
ein Außenumfang des Basisabschnitts eine Form hat, die zwei lange Seiten (136a) und zwei kurze Seiten (136b) kombiniert, und
der Schürzenabschnitt die Freiräume an Positionen aufweist, die den kurzen Seiten des Basisabschnitts entsprechen.

11. Die mit einem Pad ausgestattete Hebevorrichtung nach Anspruch 6 oder 9, wobei das distale Ende des Schürzenabschnitts mit einem nach außen gebogenen Abschnitt versehen ist.

12. Die mit einem Pad ausgestattete Hebevorrichtung nach Anspruch 1, die ferner Folgendes umfasst einen Ausrückstopper (152, 162), der verhindert, dass das Pad aus dem Körper ausgerückt wird.

13. Die mit einem Pad ausgestattete Hebevorrichtung nach Anspruch 12, wobei
der Ausrückstopper aus einem ersten Ausrückstopper (154) und einem zweiten Ausrückstopper (156) besteht,
der erste Ausrückstopper umfasst
einen flachen Plattenabschnitt (154a), der in Kontakt mit einer Endfläche des Verbindungsabschnitts des Pads kommt, und
einen zylindrischen Abschnitt (154b), der zu dem Verbindungsabschnitt des Pads passt,
der zweite Ausrückstopper ein Eingriffsstück (156a) aufweist, das in einen Nutabschnitt (12b) des Körpers eingreift, und
der flache Plattenabschnitt des ersten Ausrückstoppers sandwichartig zwischen der Endfläche des Verbindungsabschnitts des Pads und dem Eingriffsstück des zweiten Ausrückstoppers angeordnet ist.

14. Die mit einem Pad ausgestattete Hebevorrichtung nach Anspruch 1, wobei das Pad einen Netzabschnitt (172) aufweist, der verhindert, dass der Gegenstand mit dem Körper kollidiert.

15. Die mit einem Pad ausgestattete Hebevorrichtung nach Anspruch 1, wobei das Pad einen Basisabschnitt (136, 186) aufweist, der plattenförmig ist und den Schürzenabschnitt mit dem Verbindungsabschnitt verbindet.

## Revendications

1. Dispositif de levage équipé d'un tampon (10, 150, 160, 170) comprenant un corps (12) et un tampon (42, 48, 54, 60, 66, 82, 90, 100, 108, 116, 124, 132, 182), et aspirant un article par effet Bernoulli,
dans lequel le tampon inclut
une partie de raccordement (44, 50, 56, 62, 68, 84, 92, 102, 110, 118, 126, 134, 184) fixé à une extrémité du corps, et
une partie de jupe (46, 52, 58, 64, 70, 86, 94, 104, 112, 120, 128, 138, 188), laquelle est flexible et s'élargit vers une extrémité distale de la partie de jupe, et
de l'air s'écoulant le long d'une surface d'extrémité du corps s'écoule sur un côté intérieur de la partie de jupe du tampon, moyennant quoi l'extrémité distale de la partie de jupe est déformée pour se rétrécir vers l'intérieur.

2. Dispositif de levage équipé d'un tampon selon la revendication 1, dans lequel
le tampon est constitué de caoutchouc de silicone.

3. Dispositif de levage équipé d'un tampon selon la revendication 1, dans lequel
la partie de jupe est conique.

4. Dispositif de levage équipé d'un tampon selon la revendication 1, dans lequel
une forme d'ouverture d'extrémité distale de la partie de jupe est une ellipse, ou
dans lequel
une forme d'ouverture d'extrémité distale de la partie de jupe est un polygone.

5. Dispositif de levage équipé d'un tampon selon la revendication 1, dans lequel
la partie de jupe inclut une pluralité de barres (72) s'étendant à partir de l'extrémité distale de la partie de jupe vers la partie de raccordement.

6. Dispositif de levage équipé d'un tampon selon la revendication 1, dans lequel
la partie de jupe inclut une pluralité d'encoches (88, 98, 106) s'étendant à partir de l'extrémité distale de la partie de jupe vers un voisinage de la partie de raccordement.

7. Dispositif de levage équipé d'un tampon selon la revendication 1, dans lequel
la partie de jupe est dotée d'une pluralité d'encoches formées à partir de l'extrémité distale de la partie de jupe vers la partie de raccordement,
la partie de jupe est constituée d'une pluralité de bandes de pièces de jupe (104a), et
des bandes adjacentes de pièces de jupe parmi la pluralité de bandes de pièces de jupe se chevauchent entre elles.

8. Dispositif de levage équipé d'un tampon selon la revendication 1, dans lequel
la partie de jupe inclut une pluralité de plis (114, 122, 130, 190) s'étendant à partir de l'extrémité distale de la partie de jupe vers la partie de raccordement.

9. Dispositif de levage équipé d'un tampon selon la revendication 1, dans lequel
la partie de jupe inclut une paire de rainures de dégagement (140).

10. Dispositif de levage équipé d'un tampon selon la revendication 9, dans lequel
le tampon inclut une partie de base (136), laquelle est plate et relie la partie de jupe à la partie de raccordement,
une circonférence extérieure de la partie de base présente une forme combinant deux côtés longs (136a) et deux côtés courts (136b), et
la partie de jupe inclut les rainures de dégagement à des positions correspondant aux côtés courts de la partie de base.

11. Dispositif de levage équipé d'un tampon selon la revendication 6 ou 9, dans lequel
l'extrémité distale de la partie de jupe est dotée d'une partie incurvée vers l'extérieur.

12. Dispositif de levage équipé d'un tampon selon la revendication 1, comprenant en outre
une butée de désengagement (152, 162) empêchant le tampon de se désengager du corps.

13. Dispositif de levage équipé d'un tampon selon la revendication 12, dans lequel
la butée de désengagement est constituée d'une première butée de désengagement (154) et d'une deuxième butée de désengagement (156),
la première butée de désengagement inclut
une partie de plaque plate (154a) venant en contact avec une surface d'extrémité de la partie de raccordement du tampon, et
une partie cylindrique (154b) adaptée à la partie de raccordement du tampon,
la deuxième butée de désengagement inclut une pièce d'engagement (156a) s'engageant avec une partie de rainure (12b) du corps, et
la partie de plaque plate de la première butée de désengagement est prise en sandwich entre la surface d'extrémité de la partie de raccordement du tampon et la pièce d'engagement de la deuxième butée de désengagement.

14. Dispositif de levage équipé d'un tampon selon la revendication 1, dans lequel
le tampon inclut une partie de filet (172) empêchant l'article de percuter le corps.

15. Dispositif de levage équipé d'un tampon selon la revendication 1, dans lequel
le tampon inclut une partie de base (136, 186) en forme de plaque et reliant la partie de jupe à la partie de raccordement.
